# EUROPEAN PATENT SPECIFICATION

(11) **EP 0 166 420 B1**
(45) Date of publication and mention of the grant of the patent: **10.11.1993**
(21) Application number: 85107832.9
(22) Date of filing: 25.06.1985
(51) Int. Cl.: C05G 3/08, A01N 43/56, C05C 13/00

(54) **Method for increasing the growth of certain plants**
Verfahren zur Verbesserung des Wachstums bestimmter Pflanzen
Procédé pour améliorer la croissance de certaines plantes

(30) Priority: 25.06.1984 US 624427
(43) Date of publication of application: 02.01.1986
(73) Proprietor: DOWELANCO, Indianapolis, Indiana 46268-1189 (US)
(72) Inventor: McCormick, Ronald W., Concord California 94519 (US); Arndt, Kim E., Pittsburg California, 94565 (US)
(74) Representative: Weickmann, Heinrich, Dipl.-Ing.

(56) References cited:
- US-A- 3 635 690

## Description

An active area of agricultural research is devoted to the production of more productive plant life, particularly that plant life associated with food sources for man. In this research, much effort has been expended in developing means for the regulation of the growth pattern of plant life, particularly as evidenced by the enhancement of growth and the enhancement of maturation.

These objectives have been accomplished, in part, by the development and distribution of various chemical agents which alter or modify the growth characteristics of plants.

Various pyrazole compounds have been taught in Japanese Patent publication 39-13030/1964. These pyrazoles are used in admixture with aryloxy fatty acids and are useful in suppressing plant growth, killing plants or accelerating growth, rooting, ripening, enlarging fruits, preventing fruits from falling, ending hibernation and accelerating or suppressing blossoming.

The present invention is directed to a method for increasing the growth of corn, cotton, wheat, rice, barley or sugarbeets which comprises applying to the soil in which the plants are planted, a growth increasing amount of a composition containing, as the active growth increasing material, a compound from the group consisting of 3-methylpyrazole, 3,4-dimethylpyrazole, 4-bromo-3-methylpyrazole, 4-fluoro-3-methylpyrazole and 4-chloro-3-methylpyrazole.

It has been found that many crop plants fail to intercept more than 40 percent of the incident radiation between planting and harvest. It has also been found that an early establishment of leaf cover allows for increased photosynthesis.

In grain producing plants it has been found that the grain yield potential is responsive to some extent to the carbohydrate reserves which are accumulated during the earliest development of the plants.

Of the broadleaf crop plants, some such as sugarbeets are slow growing and it has been found that even with earlier than normal planting leaf cover can be incomplete at mid-summer when conditions most favor photosynthesis.

The early establishment of leaf cover is important. The treatment of crop plants with the pyrazoles employed in the present invention has been found to increase the early growth of plants giving plants of increased size and growth as compared to untreated plants.

In the US-A-3,635,690 the use of pyrazole compounds in conjunction with reduced nitrogen fertilizers as nitrification inhibitors has been described. The pyrazole compound serves the inhibition of the nitrification of ammonium nitrogen.

The provision of an effective growth increasing dosage of the pyrazole compound in the soil is essential for the practice of the present invention. In general, good results are obtained when the soil is treated with the pyrazole compound in the amount of from about 0.01 to 2.0 pounds per acre (.0112 to 2.24 kgs/hectare). The preferred amounts to be employed, are dependent upon the particular situation. Thus, in determining the amount to be employed, consideration is made not only of the treatment need, i.e., soil pH, temperature, soil type, etc., but also of the mode of application to soil.

The expression "soil" is employed herein in its broadest sense to be inclusive of all conventional "soils", as defined in Webster's New International Dictionary, Second Edition, unabridged, published in 1937, G. C. Merriam Co., Springfield, Mass. Thus, the term refers to any substance or medium in which plants may take root and grow, and is intended to include not only earth, but also compost, manure, muck, sand and synthetic growth mediums such as vermiculite and pearlite adapted to support plant growth.

In one method for carrying out the present invention, the pyrazole compound is distributed throughout the soil in a broadcast application such as by spraying, dusting, distributing in irrigation water, etc. In field administration, the pyrazole compound can be distributed in the soil in the amount of at least 0.01 pound per acre (0.0112 kgs/hectare) and through such cross section of the soil as to provide for the presence therein of an effective concentration of the compound.

In another method for carrying out the present invention the pyrazole compound is administered to soil in a band or row application. After administration with or without discing or dragging, subsequent irrigation or rainfall distributes the pyrazole compound throughout the soil.

In the present invention, the pyrazole compound is distributed throughout the soil either prior to seeding, at seeding or after seeding but before germination. It is preferred that the pyrazole compound be distributed in the soil prior to seeding. In such operations, the compounds should be supplied in the soil in amounts which have preferred upper limits at about 2.0 pounds per acre (2.24 kgs/hectare).

In an additional embodiment, the soil is treated with the pyrazole compound in conjunction with the application of fertilizers. The treatment with the pyrazole compound can be carried out prior to, subsequent to or simultaneously with the application of fertilizers. The administration to the soil of the pyrazole compound in conjunction with a reduced nitrogen fertilizer constitutes a preferred embodiment of the present invention.

The present invention can be carried out by distributing the pyrazole compound as a constituent in customary liquid or finely-divided solid compositions. Such formulations can be solutions, emulsions, wettable powders, suspensions, powders, dusts, granules, suspension or emulsion concentrates, microcapsules in polymeric substances, coatings on solid materials and the like. In such practice, the pyrazole compound can be modified with one or more additaments or soil treating adjuvants including water, petroleum distillates or other liquid carriers, surface-active dispersing agents, inert finely-divided solids and fertilizers such as reduced nitrogen fertilizers. Preferred adjuvants are surface-active dispersing agents, inert finely-divided solids, and, especially, reduced nitrogen fertilizers; these adjuvants cooperate with the pyrazole compound so as to facilitate the practice of the present invention and to obtain an improved result. Depending upon concentration of the pyrazole compound, augmented compositions can be distributed in the soil without further modification or can be considered as concentrates and subsequently diluted with additional inert carrier to produce the ultimate treating composition. The required amount of the pyrazole compound can be supplied to soil in from 1 to 50 gallons (3.79 to 189.27 liters) of organic solvent carrier, in from 5 to 200 or more gallons (18.93 to 757.08 liters) of aqueous carrier or in from 20 to 2,000 pounds of solid carrier per acre (22.4 to 2240 kgs/hectare) treated. When an organic solvent carrier is employed, it can be further dispersed in the above volume of aqueous liquid carrier.

The concentration of the pyrazole compound in compositions to be employed for the treatment of soil can vary considerably provided the required dosage of effective agent is supplied to the growth media. In general, good results are obtained with liquid compositions containing from 0.01 to 1.0 percent by weight of the pyrazole compound; in some operations, however, compositions containing amounts of pyrazole compound in excess of 1.0 percent, such as from 2 to 98 percent of pyrazole compound by weight of composition are conveniently employed, as for example, in row or band application. With dusts, good results are usually obtained with compositions containing from 0.01 to 10 percent or more by weight of pyrazole compound. In some circumstances, such as in high-intensity application, however, it is preferred to employ dust compositions containing as much as from 2 to 98 percent or more by weight of the pyrazole compound. Liquid or dust compositions in which the pyrazole compound is present in higher concentration can be utilized as such or can be employed as concentrate compositions to be diluted to prepare actual treating compositions.

The expression "reduced nitrogen fertilizers" as employed in the present specification and claims, is understood in the art as embracing both inorganic and organic nitrogenous materials containing nitrogen in the reduced state. Examples of known reduced nitrogen fertilizers include anhydrous ammonia, aqueous ammonia, inorganic ammonium salts such as ammonium phosphates, ammonium nitrate and ammonium sulfate, ammonium salts of organic acids, urea, cyanamide, guanidine nitrate, dicyandiamide, thiourea, urea-form and other nitrogen-containing organic chemical fertilizers as well as protein mixtures, animal tankages, green manure, fish products, crop residues, and other materials known to be sources of ammonium ions in soil.

Liquid compositions containing the desired amount of the pyrazole compound can be prepared by dispersing the latter in one or more fluid carriers such as water or an organic solvent, with or without the aid of a suitable surface-active dispersing agent or emulsifying agent. Suitable organic solvents include acetone, diisobutylketone, methanol, ethanol, isopropyl alcohol, diethyl ether, toluene, methylene chloride, chlorobenzene and the petroleum distillates. The preferred organic solvents are those which are of such volatility that they leave little permanent residue in the growth media. When the solutions of the pyrazole compound in organic solvents are to be further diluted to produce aqueous dispersions, the preferred solvents include acetone and the alcohols. When the liquid carrier is entirely organic in nature, particularly desirable carriers are the petroleum distillates boiling almost entirely under 400°F (204°C) at atmospheric pressure and having a flashpoint above about 80°F (27°C).

The expression "surface-active dispersing agent" as herein employed is intended to include all agents which are capable of acting at the interfacial surface as the dispersion medium. Thus, the term is inclusive of the ionic and non-ionic wetting and emulsifying agents such as the alkaline earth metal caseinates, alkyl aryl sulfonates, sulfonated oils, complex organic ester derivatives and complex ether alcohols.

The surface-active agents are generally employed in the amount of from 1 to 20 percent by weight of the pyrazole compound.

Solid compositions containing the active agent can be prepared by dispersing the latter in finely-divided inert solid carriers such as talc, chalk, gypsum, vermiculite, finely-divided aluminum hydroxide, finely-divided bentonite, fuller's earth, attapulgite and other clays and the like. Similarly, dust compositions containing the active compounds are prepared from solid fertilizer compositions. In preparing such compositions, the carrier is mechanically ground with the pyrazole compound or wet with a solution or dispersion thereof in a volatile organic solvent. These solid compositions may, if desired, also contain an alkyl aryl sulfonate or other surface-active dispersing agent. Depending upon the proportions of ingredients, these compositions can be employed without further modification or be considered as concentrates and subsequently further diluted with solid surface-active dispersing agent, talc, chalk, gypsum, or the like to obtain the desired treating composition. Furthermore, such concentrate compositions can be dispersed in water with or without added dispersing agent or agents to prepare aqueous soil treating compositions. Using similar preparative procedures, granular formulations can also be prepared.

In operations carried out in accordance with the present invention, the soil can be impregnated in any convenient fashion With the active pyrazole compound or a composition containing the latter. For example, these modified or unmodified compositions can be mechanically mixed with the soil; applied to the surface of soil and thereafter dragged or disced into the soil to a desired depth; or transported into the soil with a liquid carrier such as by injection, spraying or irrigation. When the distribution is carried out by introducing the pyrazole compound in the water employed to irrigate the soil, the amount of water is varied in accordance with the moisture content of the soil in order to obtain a distribution of the pyrazole compound to the desired depth. The pyrazole compound can be readily and conveniently distributed to a depth of a few inches (cms) to 4 feet (1.2 meters) by irrigation methods. The preferred methods embrace procedures using any of these steps or combination of steps wherein pyrazole compound is distributed in the soil substantially simultaneously with a reduced nitrogen fertilizer.

The following examples further illustrate the invention.

### Example I

Wheat seeds of the variety Coker 747 were grown in a greenhouse in plastic pots containing a sandy loam soil which had been thoroughly mixed in the top 2 inches (5 cms) with a composition containing 0.2 mg of one of the hereinafter set forth compounds and 150 mg of nitrogen as diammonium phosphate. The pots were incubated for 42 days at 80°F (27°C) and thoroughly watered prior to planting the seeds. Additional seeds were planted in soil containing none of the pyrazole compound to serve as controls. Thirty (30) days after planting, the plants were cut off at the soil line and dried in an oven at 95°C for 24 hours. At the end of this period, the dry weight of the treated plants and the controls were compared to determine the percent weight increase over the controls. The results of this comparison and the compounds employed are set forth below in Table I.

**TABLE I**

| Compound Tested | Dry Weight of Wheat | Percent increase over control |
|---|---|---|
| 3-methylpyrazole | 1.8 | 164 |
| 3,4-dimethylpyrazole | 2.2 | 200 |
| 4-bromo-3-methylpyrazole | 1.8 | 164 |
| 4-chloro-3-methylpyrazole | 1.9 | 173 |
| Control | 1.1 | - |

### Example II

Corn seeds of the variety FM 3006 were grown in a greenhouse in plastic pots containing a sandy loam soil which had been thoroughly mixed in the top 2 inches (5 cms) with a composition containing 0.2 mg of 3-methylpyrazole and 200 mg of nitrogen as diammonium phosphate. The pots were incubated for 54 days at 80°F (27°C) and thoroughly watered prior to planting the seeds. Additional seeds were planted in soil containing none of the pyrazole compound to serve as controls. Twenty (20) days after planting, the plants were cut off at the soil line and dried in an oven at 95°C for 24 hours. At the end of this period, it was found that the dry weight of the treated plants was 2.4 (± 0.1) grams as opposed to the 1.6 (± 0.3) grams of the control plants for a 150 percent weight increase over the controls.

### Example III

Corn seeds of the variety FM 3006 were grown in a greenhouse in 18 inch (45.72 cm) long columns, 1.1 inch (2.79 cm) in diameter and seed beds containing a sandy loam soil which had been thoroughly mixed in the top 3 inches (7.6 cms) with a composition containing 0.15 mg of 3,4-dimethylpyrazole and 75 mg of nitrogen as diammonium phosphate. The pots were incubated for 42 days at 80°F (27°C) and thoroughly watered prior to planting the seeds. Additional seeds were planted in soil containing none of the pyrazole compound to serve as controls. Twenty-three (23) days after planting, the plants were cut off at the soil line and dried in an oven at 95°C for 24 hours. At the end of this period, it was found that the dry weight of the treated plants was 2.0 (± 0.1) grams as opposed to the 1.1 (± 0.1) grams of the control plants for a 182 percent weight increase over the controls.

### Example IV

Corn seeds of the variety FM 3006 were grown in a greenhouse in plastic pots containing a sandy loam soil which had been thoroughly mixed in the top 2 inches (5 cms) with a composition containing 0.1 mg of 4-chloro-3-methylpyrazole and 100 mg of nitrogen as urea. The pots were incubated for 26 days at 80°F (27°C) and thoroughly watered prior to planting the seeds. Additional seeds were planted in soil containing none of the pyrazole compound to serve as controls. Twenty-three (23) days after planting, the plants were cut off at the soil line and dried in an oven at 95°C for 24 hours. At the end of this period, it was found that the dry weight of the treated plants was 2.4 (± 0.5) grams as opposed to the 1.6 (± 0.2) grams of the control plants for a 150 percent weight increase over the controls.

### Example V

Corn seeds of the variety FM 3006 were grown in a greenhouse in plastic pots containing a sandy loam soil which had been thoroughly mixed in the top 2 inches (5 cms) with a composition containing 0.12 mg of 4-bromo-3-methylpyrazole and 240 mg of nitrogen as diammonium phosphate. The pots were incubated for 42 days at 80°F (27°C) and thoroughly watered prior to planting the seeds. Additional seeds were planted in soil containing none of the pyrazole compound to serve as controls. Twenty four (24) days after planting, the plants were cut off at the soil line and dried in an oven at 95°C for 24 hours. At the end of this period, it was found that the dry weight of the plants was 3.4 (±0.6) grams as opposed to the 2.5 (±0.4) grams of the control plants for a 136 percent weight increase over the controls.

### Example VI

Sugar beet seeds of the variety S-2394 were grown in a greenhouse in plastic pots containing a sandy loam soil which had been thoroughly mixed in the top 2 inches (5 cms) with a composition containing 0.15 mg of 4-chloro-3-methylpyrazole and 150 mg of nitrogen as diammonium phosphate. The pots were incubated for 35 days at 80°F (27°C) and thoroughly watered prior to planting the seeds. Additional seeds were planted in soil containing none of the pyrazole compound to serve as controls. Twenty-three (23) days after planting, the plants were cut off at the soil line and dried in an oven at 95°C for 24 hours. At the end of this period, it was found that the dry weight of the treated plants was 1.0 grams as opposed to the 0.5 grams of the control plants for a 200 percent weight increase over the controls.

### Example VII

Barley seeds of the variety Briggs were grown in a greenhouse in plastic pots containing a sandy loam soil which had been thoroughly mixed in the top 2 inches (5 cms) with a composition containing 0.15 mg of 3,4-dimethylpyrazole and 150 mg of nitrogen as diammonium phosphate. The pots were incubated for 35 days at 80°F (27°C) and thoroughly watered prior to planting the seeds. Additional seeds were planted in soil containing none of the pyrazole compound to serve as controls. Twenty-one (21) days after planting, the plants were cut off at the soil line and dried in an oven at 95°C for 24 hours. At the end of this period, it was found that the dry weight of the treated plants was 0.9 grams as opposed to the 0.4 grams of the control plants for a 225 percent weight increase over the controls.

### Example VIII

Cotton seeds of the variety SJ-2 were grown in a greenhouse in plastic pots containing a sandy loam soil which had been thoroughly mixed in the top 2 inches (5 cms) with a composition containing 0.15 mg of 4-bromo-3-methylpyrazole and 150 mg of nitrogen as diammonium phosphate. The pots were incubated for 35 days at 80°F (27°C) and thoroughly watered prior to planting the seeds. Additional seeds were planted in soil containing none of the pyrazole compound to serve as controls. Twenty-three (23) days after planting, the plants were cut off at the soil line and dried in an oven at 95°C for 24 hours. At the end of this period, it was found that the dry weight of the treated plants was 1.9 grams as opposed to the 1.0 grams of the control plants for a 190 percent weight increase over the controls.

### Example IX

Rice seeds of the variety Japonica (CJM-7) were grown in a greenhouse in plastic pots containing a sandy loam soil which had been thoroughly mixed in the top 2 inches (5 cms) with a composition containing 0.15 mg of 3-methylpyrazole and 150 mg of nitrogen as diammonium phosphate. The pots were incubated for 35 days at 80°F (27°C) and thoroughly watered prior to planting the seeds. Additional seeds were planted in soil containing none of the pyrazole compound to serve as controls. Twenty-seven (27) days after planting, the plants were cut off at the soil line and dried in an oven at 95°C for 24 hours. At the end of this period, it was found that the dry weight of the treated plants was 1.2 grams as opposed to the 0.4 grams of the control plants for a 300 percent weight increase over the controls.

## Claims

1. A method for increasing the growth of corn, cotton, wheat, rice, barley or sugarbeets which comprises applying to the soil in which said plants are planted, a growth increasing amount of a composition containing, as the active growth increasing material . 3-methylpyrazole, 3,4-dimethylpyrazole, 4-fluoro-3-methylpyrazole, 4-chloro-3-methylpyrazole, 4-bromo-3-methylpyrazole or a mixture thereof.

2. The method as defined in Claim 1 wherein the plant is corn.

3. The method as defined in Claim 2 wherein the compound applied is 3-methylpyrazole, 3,4-dimethylpyrazole, 4-bromo-3-methylpyrazole, or 4-chloro-3-methylpyrazole.

4. The method as defined in Claim 1 wherein the plant is cotton.

5. The method as defined in Claim 4 wherein the compound applied is 3-methylpyrazole, 3,4-dimethylpyrazole, 4-bromo-3-methylpyrazole, or 4-chloro-3-methylpyrazole.

6. The method as defined in Claim 1 wherein the plant is wheat.

7. The method as defined in Claim 6 wherein the compound applied is 3-methylpyrazole, 3,4-dimethylpyrazole, 4-bromo-3-methylpyrazole, or 4-chloro-3-methylpyrazole.

8. The method as defined in Claim 1 wherein the plant is rice.

9. The method as defined in Claim 8 wherein the compound applied is 3-methylpyrazole, 3,4-dimethylpyrazole, 4-bromo-3-methylpyrazole, or 4-chloro-3-methylpyrazole.

10. The method as defined in Claim 1 wherein the plant is barley.

11. The method as defined in Claim 10 wherein the compound applied is 3-methylpyrazole, 3,4-dimethylpyrazole, 4-bromo-3-methylpyrazole, or 4-chloro-3-methylpyrazole.

12. The method as defined in Claim 1 wherein the plant is sugar beets.

13. The method as defined in Claim 12 wherein the compound applied is 3-methylpyrazole, 3,4-dimethylpyrazole, 4-bromo-3-methylpyrazole, or 4-chloro-3-methylpyrazole.

## Patentansprüche

1. Verfahren zum Erhöhen des Wachstums von Mais, Baumwolle, Weizen, Reis, Gerste oder Zuckerrüben, das die Ausbringung einer wachstumserhöhenden Menge einer Zusammensetzung, die als wirksames wachstumserhöhendes Material 3-Methylpyrazol, 3,4-Dimethylpyrazol, 4-Fluor-3-methylpyrazol, 4-Chlor-3-methylpyrazol, 4-Brom-3-methylpyrazol oder ein Gemisch davon enthält, auf den Boden, in dem die Pflanzen angepflanzt sind, umfaßt.

2. Verfahren nach Anspruch 1, worin die Pflanze Mais ist.

3. Verfahren nach Anspruch 2, worin die ausgebrachte Verbindung 3-Methylpyrazol, 3,4-Dimethylpyrazol, 4-Brom-3-methylpyrazol oder 4-Chlor-3-methylpyrazol ist.

4. Verfahren nach Anspruch 1, worin die Pflanze Baumwolle ist.

5. Verfahren nach Anspruch 4, worin die ausgebrachte Verbindung 3-Methylpyrazol, 3,4-Dimethylpyrazol, 4-Brom-3-methylpyrazol oder 4-Chlor-3-methylpyrazol ist.

6. Verfahren nach Anspruch 1, worin die Pflanze Weizen ist.

7. Verfahren nach Anspruch 6, worin die ausgebrachte Verbindung 3-Methylpyrazol, 3,4-Dimethylpyrazol, 4-Brom-3-methylpyrazol oder 4-Chlor-3-methylpyrazol ist.

8. Verfahren nach Anspruch 1, worin die Pflanze Reis ist.

9. Verfahren nach Anspruch 8, worin die ausgebrachte Verbindung 3-Methylpyrazol, 3,4-Dimethylpyrazol, 4-Brom-3-methylpyrazol oder 4-Chlor-3-methylpyrazol ist.

10. Verfahren nach Anspruch 1, worin die Pflanze Gerste ist.

11. Verfahren nach Anspruch 10, worin die ausgebrachte Verbindung 3-Methylpyrazol, 3,4-Dimethylpyrazol, 4-Brom-3-methylpyrazol oder 4-Chlor-3-methylpyrazol ist.

12. Verfahren nach Anspruch 1, worin die Pflanze Zuckerrübe ist.

13. Verfahren nach Anspruch 12, worin die ausgebrachte Verbindung 3-Methylpyrazol, 3,4-Dimethylpyrazol, 4-Brom-3-methylpyrazol oder 4-Chlor-3-methylpyrazol ist.

## Revendications

1. Procédé pour améliorer la croissance du maïs, du coton, du blé, du riz, de l'orge et de la betterave à sucre comprenant l'application sur le sol dans lequel ces plantes sont plantées, une quantité suffisante pour l'amélioration de la croissance d'une composition contenant, à titre de produit actif pour l'amélioration de la croissance, du 3-méthyl-pyrazole, 3,4-diméthylpyrazole, 4-fluoro-3-méthylpyrazole, 4-chloro-3-méthylpyrazole, 4-bromo-3-méthylpyrazole ou leurs mélanges.

2. Méthode selon la revendication 1, caractérisée en ce que la plante est le maïs.

3. Méthode selon la revendication 2, caractérisée en ce que le produit appliqué est le 3-méthylpyrazole, 3,4-diméthylpyrazole, 4-bromo-3-méthylpyrazole, ou 4-chloro-3-méthylpyrazole.

4. Procédé selon la revendication 1, caractérisé en ce que la plante est le coton.

5. Procédé selon la revendication 4, caractérisé en ce que le produit appliqué est le 3-méthylpyrazole, 3,4-diméthylpyrazole, 4-bromo-3-méthylpyrazole, ou 4-chloro-3-méthylpyrazole.

6. Procédé selon la revendication 1, caractérisé en ce que la plante est le blé.

7. Procédé selon la revendication 6, caractérisé en ce que le produit appliqué est le 3-méthylpyrazole, 3,4-diméthylpyrazole, 4-bromo-3-méthylpyrazole, ou 4-chloro-3-méthylpyrazole.

8. Procédé selon la revendication 1, caractérisé en ce que la plante est le riz.

9. Procédé selon la revendication 8, caractérisé en ce que le produit appliqué est le 3-méthylpyrazole, 3,4-diméthylpyrazole, 4-bromo-3-méthylpyrazole, ou 4-chloro-3-méthylpyrazole.

10. Procédé selon la revendication 1, caractérisé en ce que la plante est l'orge.

11. Procédé selon la revendication 10, caractérisé en ce que le produit appliqué est le 3-méthylpyrazole, 3,4-diméthylpyrazole, 4-bromo-3-méthylpyrazole, ou 4-chloro-3-méthylpyrazole.

12. Procédé selon la revendication 1, caractérisé en ce que la plante est la betterave à sucre.

13. Procédé selon la revendication 12, caractérisé en ce que le produit appliqué est le 3-méthylpyrazole, 3,4-diméthylpyrazole, 4-bromo-3-méthylpyrazole, ou 4-chloro-3-méthylpyrazole.
